# EUROPEAN PATENT APPLICATION

(11) **EP 4 027 279 A1**
(43) Date of publication of application: **13.07.2022**
(21) Application number: 21210210.7
(22) Date of filing: 24.11.2021
(51) Int. Cl.: G06Q 10/00, G06Q 30/02, G06Q 30/06

(54) **SERVER DEVICE, SYSTEM, INFORMATION PROCESSING DEVICE, NON-TRANSITORY STORAGE MEDIUM, AND OPERATION METHOD FOR SYSTEM**

(30) Priority: 08.01.2021 JP 2021002358
(71) Applicant: TOYOTA JIDOSHA KABUSHIKI KAISHA, Toyota-shi, Aichi-ken, 471-8571 (JP)
(72) Inventor: NAKASHIMA, Toyokazu, Toyota-shi, Aichi-Ken, 471-8571 (JP); HOSODA, Nodoka, Toyota-shi, Aichi-Ken, 471-8571 (JP); ISHII, Haruka, Toyota-shi, Aichi-Ken, 471-8571 (JP); YAMAMOTO, Kazuyo, Toyota-shi, Aichi-Ken, 471-8571 (JP)
(74) Representative: Cabinet Beau de Loménie

(57) **Abstract**

A server device (10) includes: a storage unit (22) storing first period information indicating a first period, manner information in the first period, and second period information indicating a second period, the first period being a period of use of an item by a user who has consented to provide the manner information, the manner information being information indicating a manner of use of the item, and the second period being a period of use of the item by a user who has not consented to provide the manner information; and a control unit (21) configured to output to an information processing device (11) information for displaying the first period information, the second period information, and condition information on the information processing device (11), the condition information being information indicating a condition of the item based on the manner information.

## Description

### BACKGROUND OF THE INVENTION

### 1. Field of the Invention

The present disclosure relates to a server device, a system, an information processing device, a non-transitory storage medium, and an operation method for the system.

### 2. Description of Related Art

A used vehicle seller or a person who wants to purchase a used vehicle determines the resale value of a vehicle based on the manner of use of the vehicle by a past owner(s). As an example of a technique for assisting in making such a determination, Japanese Unexamined Patent Application Publication No. 2020-086609 (JP 2020-086609 A) discloses a system for providing information including the driving tendency of a past driver(s).

### SUMMARY OF THE INVENTION

It is desired that a seller of items and a person who wants to purchase an item more accurately know a condition of an item regardless of whether the item is a vehicle or other item. If the seller of the items and the person who wants to purchase the item can know the past manner of use of the item, they can know the condition of the item more efficiently.

In the following description, a server device etc. that make it possible to accurately know the past manner of use of an item are disclosed.

A server device according to a first aspect of the present disclosure includes: a storage unit storing first period information indicating a first period, manner information in the first period, and second period information indicating a second period, the first period being a period of use of an item by a user who has consented to provide the manner information, the manner information being information indicating a manner of use of the item, and the second period being a period of use of the item by a user who has not consented to provide the manner information; and a control unit configured to output to an information processing device information for displaying the first period information, the second period information, and condition information on the information processing device, the condition information being information indicating a condition of the item based on the manner information.

A system according to a second aspect of the present disclosure includes the server in the first aspect and the information processing device in the first aspect.

An information processing device according to a third aspect of the present disclosure includes: a communication unit configured to send and receive information to and from a server device, the server device storing first period information indicating a first period, manner information in the first period, and second period information indicating a second period, the first period being a period of use of an item by a user who has consented to provide the manner information, the manner information being information indicating a manner of use of the item, and the second period being a period of use of the item by a user who has not consented to provide the manner information; a display unit; and a control unit configured to display the first period information, the second period information, and condition information on the display unit based on the information sent from the server device, the condition information being information indicating a condition of the item based on the manner information.

A non-transitory storage medium according to a fourth aspect of the present disclosure stores a program that is executable by a computer and that causes the computer to perform functions as the information processing device according to the third aspect.

An operation method according to a fifth aspect of the present disclosure is a method for a system including a server device and an information processing device configured to communicate with the server device. The operation method includes: storing in the server device first period information indicating a first period, manner information in the first period, and second period information indicating a second period, the first period being a period of use of an item by a user who has consented to provide the manner information, the manner information being information indicating a manner of use of the item, and the second period being a period of use of the item by a user who has not consented to provide the manner information; outputting from the server device to the information processing device information for displaying the first period information, the second period information, and condition information, the condition information being information indicating a condition of the item based on the manner information; and displaying the first period information, the second period information, and the condition information on the information processing device based on the information sent from the server device.

According to the server device etc. of the present disclosure, it is possible to accurately know the past manner of use of an item.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 illustrates a configuration example of an information processing system;
FIG. 2 illustrates a configuration example of a server device;
FIG. 3 illustrates a configuration example of an information processing device;
FIG. 4 illustrates a configuration example of an in-vehicle device;
FIG. 5 is a sequence diagram illustrating an example of an operation procedure for the server device and the information processing device;
FIG. 6 is a sequence diagram illustrating an example of an operation procedure for the server device and the information processing device;
FIG. 7 is a sequence diagram illustrating an example of an operation procedure for the server device and the in-vehicle device;
FIG. 8A is a sequence diagram illustrating an example of an operation procedure for the server device and the information processing device;
FIG. 8B is a sequence diagram illustrating an example of an operation procedure for the server device and the information processing device;
FIG. 9 illustrates a display example on the information processing device;
FIG. 10A illustrates a modification of the display example on the information processing device;
FIG. 10B illustrates a modification of the display example on the information processing device;
FIG. 10C illustrates a modification of the display example on the information processing device;
FIG. 10D illustrates a modification of the display example on the information processing device; and
FIG. 11 illustrates a modification of the display example on the information processing device.

### DETAILED DESCRIPTION OF EMBODIMENTS

Hereinafter, an embodiment will be described.

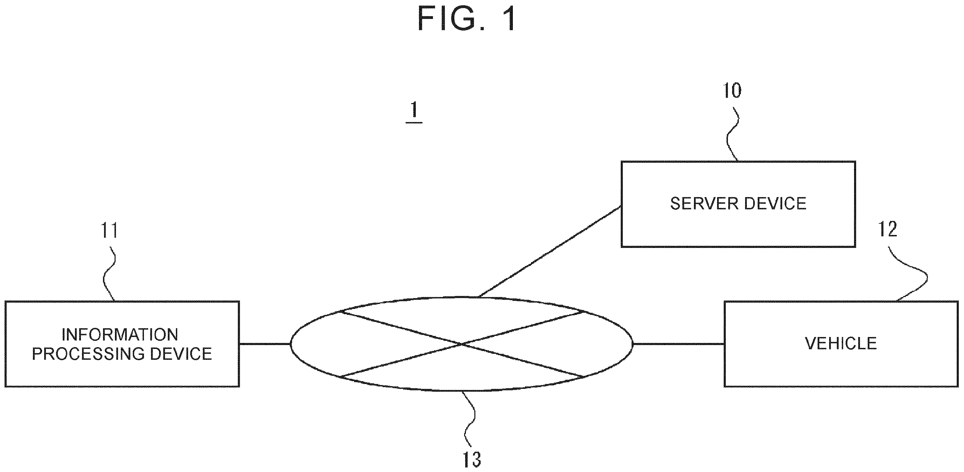

FIG. 1 illustrates a configuration example of an information processing system including a server device according to an embodiment. An information processing system 1 is a system for providing information to a seller and a person who wants to purchase a used vehicle in used car sales. The information processing system 1 includes, for example, one or more server devices 10 and one or more information processing devices 11. The server device 10 and the information processing device 11 are connected to each other via a network 13 so that they can communicate with each other. One or more vehicles 12 are connected to the network 13 via their in-vehicle devices so that the vehicle 12 can communicate with the server device 10 etc. The server device 10 is, for example, a server device that belongs to a cloud computing system or other computing system run by the seller of the vehicle 12 and that implements various functions. The information processing device 11 is, for example, an information processing device that is used by a person who wants to purchase a used vehicle or a salesperson or mechanic of the seller, and is a personal computer (PC), a tablet computer, a mobile phone, a smartphone, etc. The vehicle 12 is a vehicle that is sold as a used vehicle. For example, the network 13 is the Internet. Other examples of the network 13 include an ad hoc network, a local area network (LAN), a metropolitan area network (MAN), other network, and any combination thereof.

In the present embodiment, the server device 10 stores: information indicating a period of use of the vehicle 12 by a user who has consented to provide manner information (hereinafter referred to as the consent period); manner information in the consent period; and information indicating a period of use of the vehicle 12 by a user who has not consented to provide manner information (hereinafter referred to as the non-consent period). The manner information is information indicating the manner of use of the vehicle 12. The server device 10 outputs to the information processing device 11 information for displaying the information indicating the consent period (hereinafter referred to as the consent period information), the information indicating the non-consent period (hereinafter referred to as the non-consent period information), and condition information. The condition information is information indicating the condition of the vehicle 12 based on the manner information. The information processing device 11 displays the consent period information, the non-consent period information, and the condition information.

The vehicle 12 has been used by one or more owners before it is sold as a used vehicle (hereinafter, the user includes the owner as a person who has the right to use based on ownership). In order to collect the manner information of the vehicle 12 by the server device 10, the consent of the user at that point in time is required. Accordingly, the manner information in the consent period is collected by the server device 10 but the manner information in the non-consent period is not collected by the server device 10. According to the present embodiment, the salesperson of the seller or the person who wants to purchase a used vehicle knows the degree of collection of the manner information on which the condition of the vehicle 12 depends by checking the consent period information and the non-consent period information. That is, the salesperson or the person who wants to purchase a used vehicle can determine reliability of the condition information by checking for how long the manner information on which the condition information of the vehicle 12 is based has been collected. The salesperson or the person who wants to purchase a used vehicle can thus more accurately and efficiently know the condition of the vehicle 12.

An example in which the user purchases or sells the vehicle 12 that is sold as a used vehicle is described below. However, the present embodiment also includes the case where the user uses the vehicle 12 under a lease contract. In the case of leasing, the user acquires the right to use the vehicle 12 and acquires the vehicle 12 from the seller based on the contract. After using the vehicle 12, the user loses the right to use the vehicle 12 at the end of the contract and returns the vehicle 12 to the seller. The following description is also applied to leasing by replacing the terms "purchase" and "sell" for the vehicle 12 with the terms "start using," "return," etc.

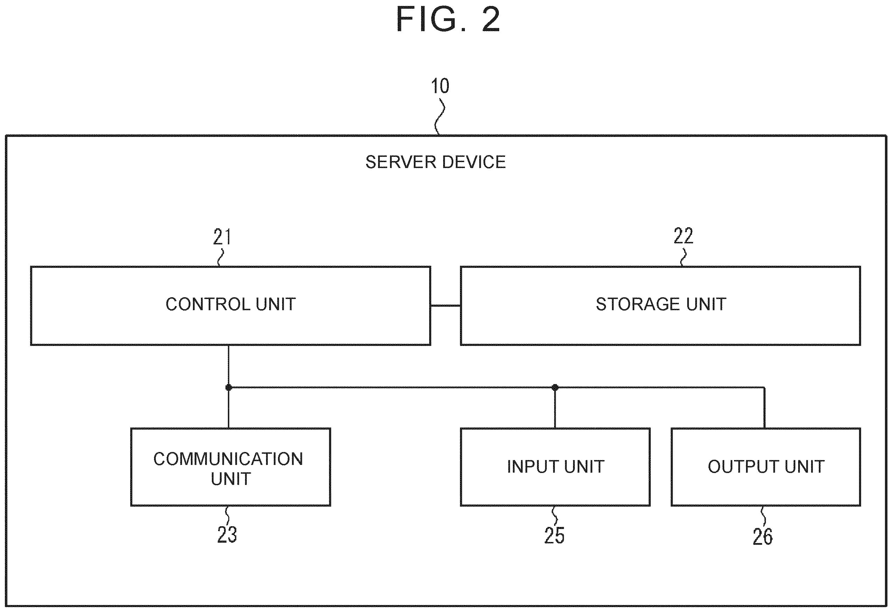

FIG. 2 illustrates a configuration example of the server device 10. The server device 10 includes a control unit 21, a storage unit 22, a communication unit 23, an input unit 25, and an output unit 26. For example, the server device 10 is a server that belongs to a cloud computing system or other computing system run by the seller of the vehicle 12 and that implements various functions.

The control unit 21 includes one or more processors, one or more dedicated circuits, or a combination thereof. The processor is, for example, a general-purpose processor such as central processing unit (CPU), or a dedicated processor specialized for a specific process. The dedicated circuit is, for example, a field-programmable gate array (FPGA) or an application-specific integrated circuit (ASIC). The control unit 21 performs information processing related to the operation of the server device 10 while controlling each unit of the server device 10.

The storage unit 22 includes one or more semiconductor memories, one or more magnetic memories, one or more optical memories, or a combination of at least two of them. The semiconductor memory is, for example, a random access memory (RAM) or a read-only memory (ROM). The RAM is, for example, a static RAM (SRAM) or a dynamic RAM (DRAM). The ROM is, for example, an electrically erasable programmable ROM (EEPROM). The storage unit 22 functions as, for example, a main storage device, an auxiliary storage device, or a cache memory. The storage unit 22 stores information to be used for the operation of the server device 10 and information obtained by the operation of the server device 10.

The communication unit 23 includes one or more communication interfaces. The communication interface is, for example, a LAN interface. The communication unit 23 receives the information to be used for the operation of the server device 10, and sends the information obtained by the operation of the server device 10. The server device 10 is connected to the network 13 through the communication unit 23 and communicates with other devices via the network 13.

The input unit 25 includes one or more input interfaces. The input interface is, for example, a physical key, a capacitive key, a pointing device, a touch screen integrated with a display, or a microphone that accepts voice input. The input interface may further include a camera that imports images or image codes, or an integrated circuit (IC) card reader. The input unit 25 accepts an operation of inputting the information to be used for the operation of the server device 10, and sends the input information to the control unit 21.

The output unit 26 includes one or more output interfaces. The output interface is, for example, a display or a speaker. The display is, for example, a liquid crystal display (LCD) or an organic electroluminescence (EL) display. The output unit 26 outputs the information obtained by the operation of the server device 10.

The functions of the server device 10 are implemented by executing a control program by the processor included in the control unit 21. The control program is a program that causes the computer to perform the steps included in the operation of the server device 10 and thus causes the computer to implement the functions corresponding to the steps. That is, the control program is a program that causes the computer to function as the server device 10. A part or all of the functions of the server device 10 may be implemented by the dedicated circuit included in the control unit 21.

In the present embodiment, the storage unit 22 of the server device 10 stores the consent period information, non-consent period information, and manner information of each vehicle 12. The consent period information and the non-consent period information are associated with identification information of the vehicle 12, and include the start and end of the respective period, identification information of the user in the respective period, and consent/non-consent information. The consent/non-consent information indicates the consent or non-consent of the user in the respective period regarding the provision of the manner information. The manner information is associated with the identification information of the vehicle 12, and includes maintenance information regarding various kinds of maintenance done on the vehicle 12, and various kinds of declaration information declared by the user. For example, the maintenance information includes: odometer readings confirmed by the mechanic; warning light or diagnostic code notifications; replacement information and replacement date (and time) information of parts such as battery, lights, and oil filter replaced by maintenance of the vehicle; and oil change information and oil change date (and time) information of oils such as engine oil and brake oil. The declaration information includes information such as accident history, flood history, and missed recall history.

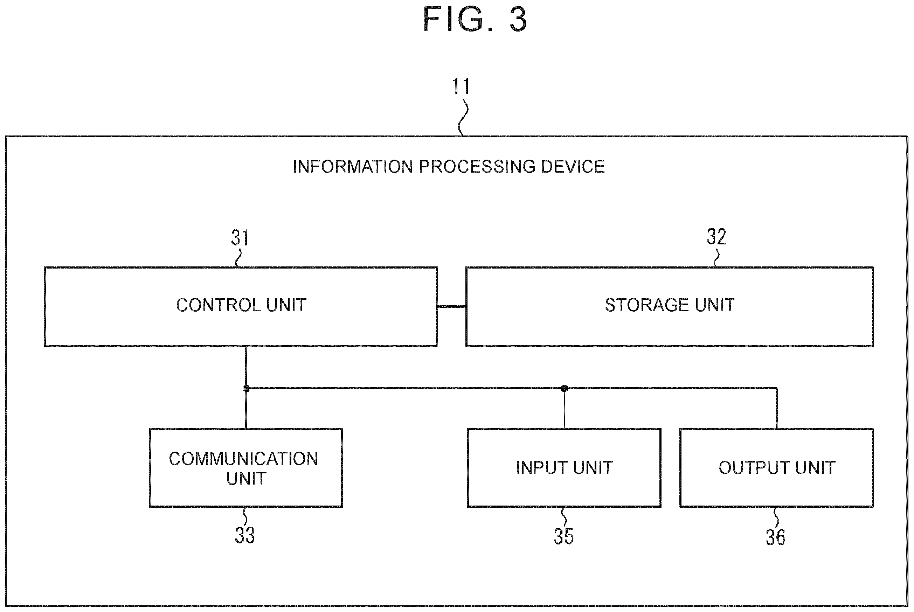

FIG. 3 illustrates a configuration example of the information processing device 11. The information processing device 11 includes a control unit 31, a storage unit 32, a communication unit 33, an input unit 35, and an output unit 36. The information processing device 11 is, for example, an information processing device that is used by the person who wants to purchase a used vehicle, the salesperson of the seller, a vehicle service and maintenance company, or an owner of the vehicle 12, and is a PC, a tablet computer, a mobile phone, a smartphone, etc.

The control unit 31 includes one or more processors, one or more dedicated circuits, or a combination thereof. The processor is, for example, a general-purpose processor such as CPU, or a dedicated processor specialized for a specific process. The dedicated circuit is, for example, an FPGA or an ASIC. The control unit 31 performs information processing related to the operation of the information processing device 11 while controlling each unit of the information processing device 11.

The storage unit 32 includes one or more semiconductor memories, one or more magnetic memories, one or more optical memories, or a combination of at least two of them. The semiconductor memory is, for example, a RAM or a ROM. The RAM is, for example, an SRAM or a DRAM. The ROM is, for example, an EEPROM. The storage unit 32 functions as, for example, a main storage device, an auxiliary storage device, or a cache memory. The storage unit 32 stores information to be used for the operation of the information processing device 11 and information obtained by the operation of the information processing device 11.

The communication unit 33 includes one or more communication interfaces. The communication interface is, for example, an interface compatible with mobile communication standards such as Long Term Evolution (LTE), 4th generation (4G), or 5th generation (5G), or a LAN interface. The communication unit 33 receives the information to be used for the operation of the information processing device 11, and sends the information obtained by the operation of the information processing device 11. The information processing device 11 is connected to the network 13 through the communication unit 33 via a nearby router device or a mobile communication base station, and communicates with other devices via the network 13.

The input unit 35 includes one or more input interfaces. The input interface is, for example, a physical key, a capacitive key, a pointing device, a touch screen integrated with a display, or a microphone that accepts voice input. The input interface may further include a camera that imports images or image codes, or an integrated circuit (IC) card reader. The input unit 35 accepts an operation of inputting the information to be used for the operation of the information processing device 11, and sends the input information to the control unit 31.

The output unit 36 includes one or more output interfaces. The output interface is, for example, an interface for connection with an external or built-in display that outputs information as an image or video, a speaker that outputs information as audio, or an external output device. The display is, for example, an LCD or an organic EL display. The output unit 36 outputs the information obtained by the operation of the information processing device 11. The output unit 36 corresponds to the "display unit."

The operation of the information processing device 11 is implemented by executing a program by the processor included in the control unit 31. The program can be recorded on a computer-readable recording medium. The computer-readable recording medium is, for example, a magnetic recording device, an optical disc, a magneto-optical recording medium, or a semiconductor memory. The program is distributed, for example, in the form of a portable recording medium such as digital versatile disc (DVD) or compact disc (CD)-ROM having the program recorded thereon. The program may be distributed by storing the program in advance in a storage of a server and transferring the program from the server to other computers. A part or all of the operations of the information processing device 11 may be implemented by the dedicated circuit included in the control unit 31.

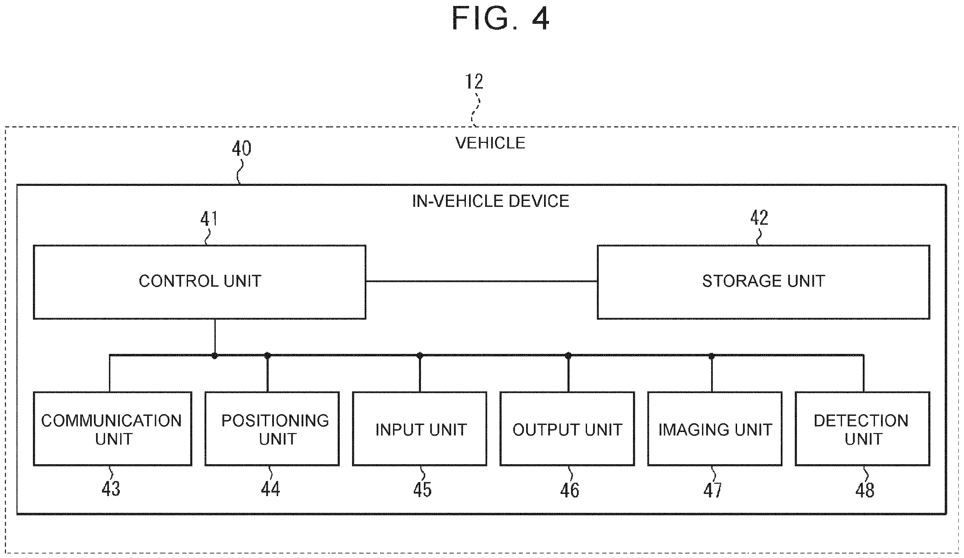

FIG. 4 illustrates a configuration example of an in-vehicle device 40 mounted on the vehicle 12. The in-vehicle device 40 includes a control unit 41, a storage unit 42, a communication unit 43, a positioning unit 44, an input unit 45, an output unit 46, an imaging unit 47, and a detection unit 48. The in-vehicle device 40 is, for example, a navigation device, a mobile phone, a smartphone, a tablet, or a PC.

The control unit 41 includes one or more processors, one or more dedicated circuits, or a combination thereof. The processor is a general-purpose processor such as CPU, or a dedicated processor specialized for a specific process. The dedicated circuit is, for example, an FPGA or an ASIC. The control unit 41 performs information processing related to the operation of the in-vehicle device 40 while controlling each unit of the in-vehicle device 40.

The storage unit 42 includes one or more semiconductor memories, one or more magnetic memories, one or more optical memories, or a combination of at least two of them. The semiconductor memory is, for example, a RAM or a ROM. The RAM is, for example, an SRAM or a DRAM. The ROM is, for example, an EEPROM. The storage unit 42 functions as, for example, a main storage device, an auxiliary storage device, or a cache memory. The storage unit 42 stores information to be used for the operation of the in-vehicle device 40 and information obtained by the operation of the in-vehicle device 40.

The communication unit 43 includes one or more communication interfaces. The communication interface is, for example, an interface compatible with mobile communication standards such as LTE, 4G, or 5G. The communication unit 43 receives the information to be used for the operation of the in-vehicle device 40, and sends the information obtained by the operation of the in-vehicle device 40. The in-vehicle device 40 is connected to the network 13 through the communication unit 43 via a mobile communication base station, and communicates with other devices via the network 13.

The positioning unit 44 includes one or more global navigation satellite system (GNSS) receivers. GNSS includes, for example, at least one of Global Positioning System (GPS), Quasi-Zenith Satellite System (QZSS), BeiDou, Global Navigation Satellite System (GLONASS), and Galileo. The positioning unit 44 acquires position information of the in-vehicle device 40.

The input unit 45 includes one or more input interfaces. The input interface is, for example, a physical key, a capacitive key, a pointing device, a touch screen integrated with a display, or a microphone that accepts voice input. The input interface may further include a camera that imports images or image codes, or an integrated circuit (IC) card reader. The input unit 45 accepts an operation of inputting the information to be used for the operation of the in-vehicle device 40, and sends the input information to the control unit 41.

The output unit 46 includes one or more output interfaces. The output interface is, for example, a display or a speaker. The display is, for example, an LCD or an organic EL display. The output unit 46 outputs the information obtained by the operation of the in-vehicle device 40.

The imaging unit 47 includes one or more cameras and a control circuit for the camera. The camera and the control circuit are disposed at such a position that the imaging unit 47 can capture an image of the surroundings of the vehicle 12 or the inside of a vehicle cabin. The camera of the imaging unit 47 may be either a monocular camera or a stereo camera. The imaging unit 47 captures an image of the surroundings of the vehicle 12 or the inside of the vehicle cabin at desired time intervals, and sends the captured image to the control unit 41.

The detection unit 48 has sensors for detecting vehicle information of the vehicle 12 or an interface with the sensors. The sensors include, for example, sensors for detecting the speed of the vehicle 12, longitudinal acceleration, lateral acceleration, deceleration, accelerator operation amount, brake operation amount, steering wheel steering angle, fuel consumption per unit time, eco-mode ON state, odometer reading, operation information of safety equipment, engine specifications, state of a drive battery (when the vehicle 12 is a hybrid vehicle or an electric vehicle), etc. The detection unit 48 sends the vehicle information indicating various conditions of the vehicle 12 detected by the sensors to the control unit 41.

The functions of the in-vehicle device 40 are implemented by executing a control program by the processor included in the control unit 41. The control program is a program that causes the computer to perform the steps included in the operation of the in-vehicle device 40 and thus causes the computer to implement the functions corresponding to the steps. That is, the control program is a program that causes the computer to function as the in-vehicle device 40. A part or all of the functions of the in-vehicle device 40 may be implemented by the dedicated circuit included in the control unit 41.

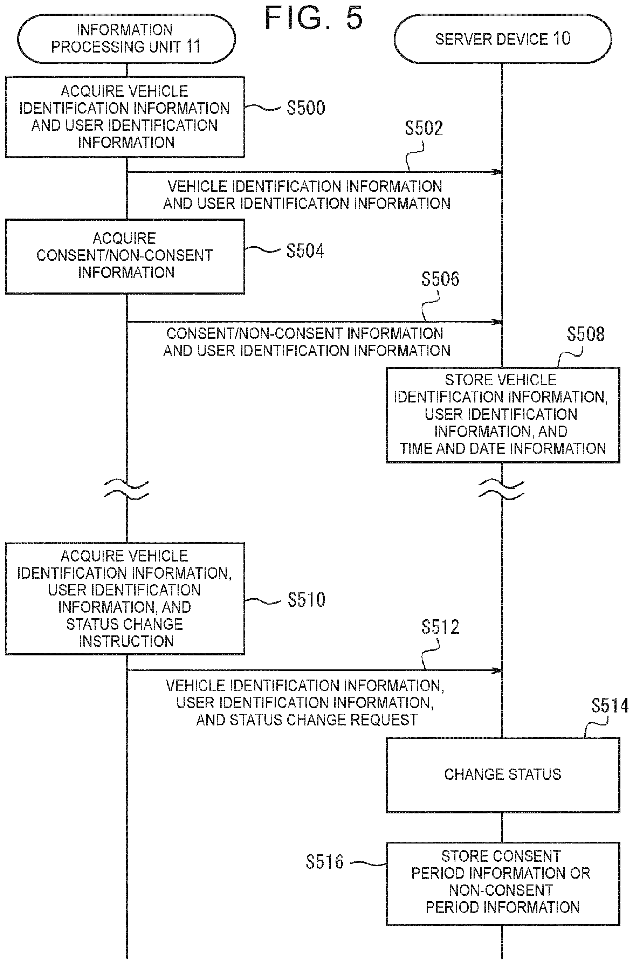

FIG. 5 is a sequence diagram illustrating an operation procedure that is followed by the server device 10 and the information processing device 11 in order to store the consent period information and the non-consent period information in the server device 10. The procedure of FIG. 5 is an example of the operation procedure that is followed by the information processing device 11 used by the salesperson of the seller and the server device 10 when the user purchases the vehicle 12 from the seller and when the user sells the vehicle 12 to the seller. Steps S500 to S508 are performed when the user purchases the vehicle 12, and steps S510 to S516 are performed when the user sells the vehicle 12.

In step S500, the information processing device 11 acquires the vehicle identification information and the user identification information. When the vehicle 12 is purchased by a new user, the salesperson inputs the vehicle identification information and the user identification information to the information processing device 11. The vehicle identification information is, for example, the vehicle name, grade, color, chassis number, model, model year, date (and time) of first year registration, manufacturing date, etc. of the vehicle 12. The user identification information is the name, address, etc. of the user. The control unit 31 of the information processing device 11 receives the vehicle identification information and the user identification information from the salesperson through the input unit 35.

In step S502, the information processing device 11 sends the vehicle identification information and the user identification information to the server device 10. The control unit 31 of the information processing device 11 sends the vehicle identification information and the user identification information to the server device 10 through the communication unit 33. The control unit 21 of the server device 10 receives the vehicle identification information and the user identification information through the communication unit 23.

In step S504, the information processing device 11 acquires the consent/non-consent information. When the salesperson of the seller obtains consent or non-consent of the user in writing etc. regarding the provision of the manner information indicating the manner of use of the vehicle 12, the salesperson inputs to the information processing device 11 the consent/non-consent information indicating that the user has consented or has not consented to provide the manner information. Alternatively, the user himself or herself may input his or her intention of consent or non-consent to the information processing device 11. The control unit 31 of the information processing device 11 accepts the consent/non-consent information through the input unit 35.

In step S506, the information processing device 11 sends the consent/non-consent information and the user identification information to the server device 10. The control unit 31 of the information processing device 11 sends the consent/non-consent information and the user identification information acquired in step S500 to the server device 10 through the communication unit 33. The control unit 21 of the server device 10 receives the consent/non-consent information and the user identification information through the communication unit 23.

In step S508, the server device 10 associates the vehicle identification information, the user identification information, and the consent/non-consent information with each other, and stores them together with date and time information of that point in time. The control unit 21 of the server device 10 associates the vehicle identification information with the user identification information and stores them together with the information of current date and time in the storage unit 22. At this time, status information indicating that the user has ownership of the vehicle 12 or the right to use the vehicle 12 is added to the user identification information. The user acquires the right to use the vehicle 12 at this time.

In step S510, the information processing device 11 acquires the vehicle identification information, the user identification information, and a status change instruction. When the vehicle 12 is sold from the user to the seller, the salesperson inputs the vehicle identification information and the user identification information to the information processing device 11 and also inputs an instruction to change the status of the user to the information processing device 11. By selling the vehicle 12, the user loses ownership of the vehicle 12 or the right to use the vehicle 12. The status change instruction is therefore an instruction to change the status information added to the user identification information by the server device 10 to status information indicating that the user has lost ownership of the vehicle 12 or the right of use the vehicle 12. The control unit 31 of the information processing device 11 receives the vehicle identification information, the user identification information, and the status change instruction from the salesperson through the input unit 35.

In step S512, the information processing device 11 sends the vehicle identification information, the user identification information, and a status change request to the server device 10. The control unit 31 of the information processing device 11 sends the vehicle identification information, the user identification information, and the status change request to the server device 10 through the communication unit 33. The control unit 21 of the server device 10 receives the vehicle identification information, the user identification information, and the status change request through the communication unit 23.

In step S514, the server device 10 changes the status information in the user identification information corresponding to the vehicle identification information. The control unit 21 of the server device 10 reads correspondence between the vehicle identification information and the user identification information from the storage unit 22. The control unit 21 then changes the status information added to the user identification information to the status information indicating that the user has lost ownership of the vehicle 12 or the right to use the vehicle 12, and stores the changed status information in the storage unit 22.

In step S516, the server device 10 stores the consent period information or the non-consent period information. The control unit 21 determines the consent period or the non-consent period according to the consent/non-consent information, and stores the consent period information or the non-consent period information in the storage unit 22. The consent period and the non-consent period start from the date and time the user acquired the right to use the vehicle 12 in step S502, and end on the date and time the user lost ownership of the vehicle 12 or the right to use the vehicle 12 in step S514.

When the user sells the vehicle 12 to the seller, the salesperson of the seller inputs the vehicle identification information and the user identification information corresponding to the seller to the information processing device 11, and also inputs the consent/non-consent information indicating consent to the information processing device 11. When the vehicle 12 is under management of the seller, the manner information can be reliably collected by the server device 10. Accordingly, by additionally performing step S500 and the subsequent steps, the period during which the vehicle 12 is under management of the seller can be processed as the consent period, and the manner information can be collected by the server device 10. Alternatively, after performing step S516, the server device 10 may acquire the position information of the vehicle 12 from the in-vehicle device 40 of the vehicle 12. When the position of the vehicle 12 is on the premises of the seller, the server device 10 may associate the vehicle identification information, the user identification information corresponding to the seller, and the consent/non-consent information indicating consent with each other even without receiving information from the information processing device 11, and may store them in the storage unit 22.

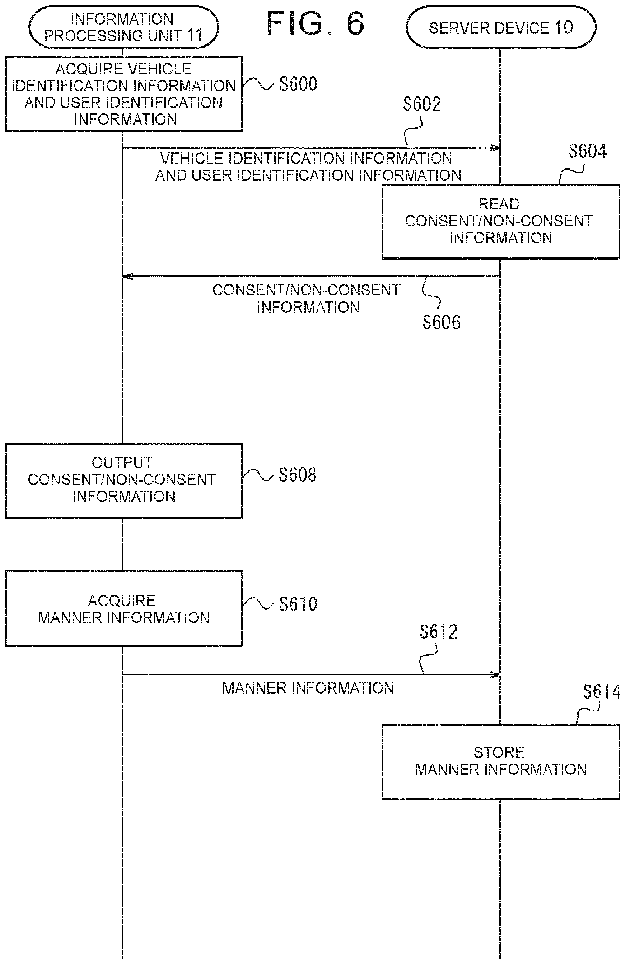

FIG. 6 is a sequence diagram showing an operation procedure that is followed by the server device 10 and the information processing device 11 in order to store the manner information in the server device 10. The procedure of FIG. 6 is an example of an operation procedure that is followed by the server device 10 and the information processing device 11 when the vehicle 12 has been brought to a maintenance facility of the seller by the user and various kinds of maintenance have been done on the vehicle 12. The procedure of FIG. 6 is performed between steps S508 and S510 in the procedure of FIG. 5.

In step S600, the information processing device 11 acquires the vehicle identification information and the user identification information. When the mechanic of the seller inputs to the information processing device 11 the vehicle identification information and the user identification information for the vehicle 12 on which maintenance has been done, the control unit 31 accepts the vehicle identification information and the user identification information through the input unit 35.

In step S602, the information processing device 11 sends the vehicle identification information and the user identification information to the server device 10. The control unit 31 of the information processing device 11 sends the vehicle identification information and the user identification information to the server device 10 through the communication unit 33. The control unit 21 of the server device 10 receives the vehicle identification information and the user identification information through the communication unit 23.

In step S604, the server device 10 reads the consent/non-consent information associated with both the vehicle identification information and the user identification information. The control unit 21 of the server device 10 reads the consent/non-consent information associated with both the vehicle identification information and the user identification information from the storage unit 22.

In step S606, the server device 10 sends the consent/non-consent information to the information processing device 11. The control unit 21 of the server device 10 sends the consent/non-consent information to the information processing device 11 through the communication unit 23. The control unit 31 of the information processing device 11 receives the consent/non-consent information through the communication unit 33.

In step S608, the information processing device 11 outputs the consent/non-consent information. The control unit 31 of the information processing device 11 displays on the output unit 36 the consent/non-consent information associated with both the vehicle identification information and the user identification information. When the mechanic confirms the consent, the mechanic inputs the manner information to the information processing device 11, and the information processing device 11 performs step S610. The manner information includes the information on the various kinds of maintenance. Alternatively, the manner information may include notification information based on notification given by the user. When the mechanic confirms the non-consent, the mechanic does not input the manner information to the information processing device 11, and step S610 and the subsequent steps will be omitted.

In step S610, the information processing device 11 acquires the manner information. When the mechanic inputs the manner information to the information processing device 11, the control unit 31 accepts the manner information through the input unit 35.

In step S612, the information processing device 11 sends the manner information to the server device 10. The control unit 31 of the information processing device 11 sends the manner information to the server device 10 through the communication unit 33. The control unit 21 of the server device 10 receives the manner information through the communication unit 23.

In step S614, the server device 10 stores the manner information. The control unit 21 of the server device 10 associates the vehicle identification information with the manner information and stores them in the storage unit 22.

The above procedure of FIG. 6 is described as a procedure that is followed when maintenance has been done on the vehicle 12. However, for example, this procedure may be followed in the case where the user has given notification when selling the vehicle 12 to the seller and the information processing device 11 sends the notification information to the server device 10.

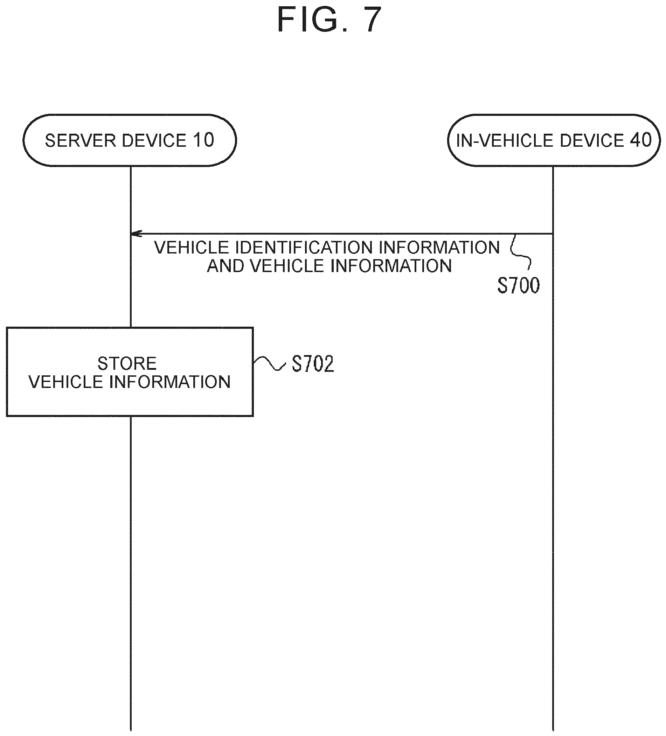

FIG. 7 is a sequence diagram showing an operation procedure that is followed by the server device 10 and the in-vehicle device 40 of the vehicle 12 in order to collect the vehicle information of the vehicle 12 in the server device 10. The procedure of FIG. 7 is an example of an operation procedure that is followed by the server device 10 and the in-vehicle device 40 when the vehicle 12 is used by the user. The procedure of FIG. 7 is performed at desired intervals (e.g., every few minutes to every few days).

In step S700, the in-vehicle device 40 sends the vehicle identification information and the vehicle information to the server device 10. The control unit 41 of the in-vehicle device 40 reads the vehicle identification information of the vehicle stored in advance in the storage unit 42, and sends the vehicle identification information together with the vehicle information acquired by the detection unit 48 to the server device 10 through the communication unit 43. The control unit 21 of the server device 10 receives the vehicle identification information and the vehicle information through the communication unit 23.

In step S702, the server device 10 stores the vehicle information. The control unit 21 of the server device 10 associates the vehicle identification information with the vehicle information and stores them with date and time in the storage unit 22.

Various kinds of information collected in the server device 10 by the procedures shown in FIGS. 5 to 7 are sent from the server device 10 to the information processing device 1 1 and output from the information processing device 11. For example, the various kinds of information collected in the server device 10 are displayed by the information processing device 11 in order to present to a new person who wants to purchase a used vehicle the collected information of the vehicle 12 sold from a certain user to the seller.

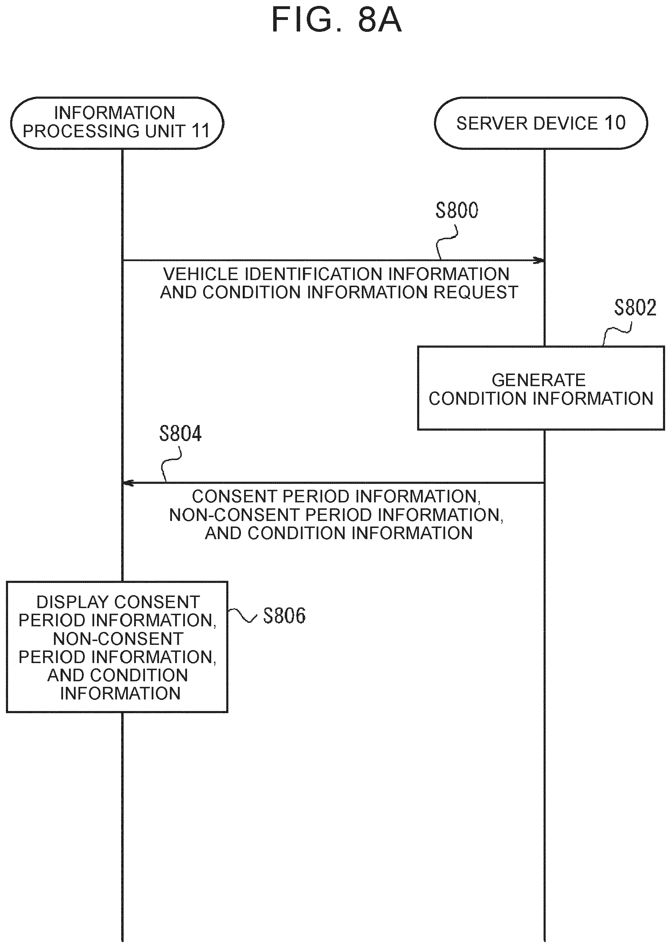

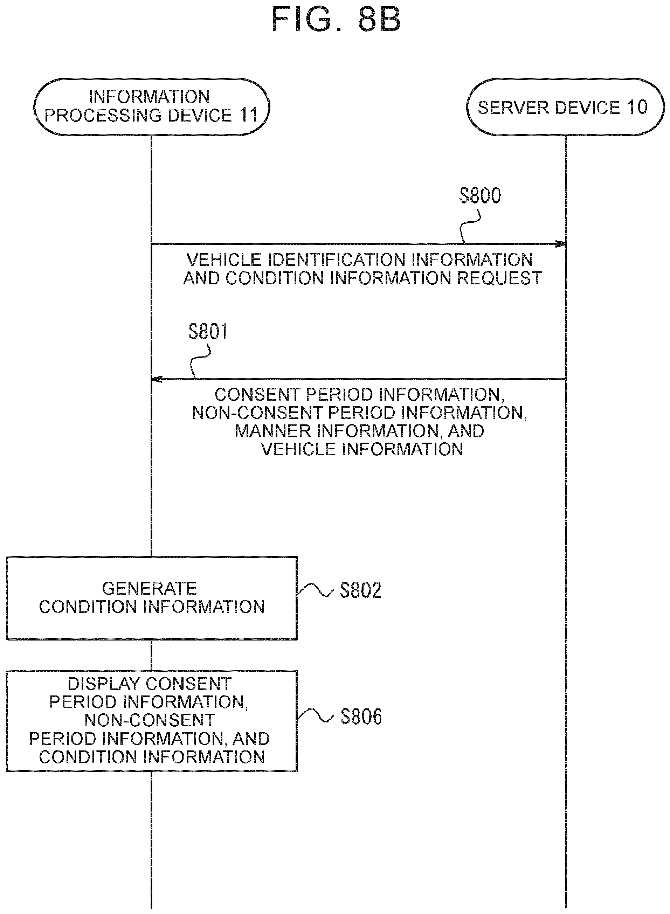

FIGS. 8A and 8B are sequence diagrams each showing an operation procedure that is followed by the server device 10 and the information processing device 11 in order to output the various kinds of information collected by the server device 10. The procedures of FIGS. 8A and 8B are examples of an operation procedure that is followed by the server device 10 and the information processing device 11 when, for example, the seller sells the vehicle 12.

As shown in FIG. 8A, in step S800, the information processing device 11 sends the vehicle identification information and a request for condition information to the server device 10. When the person who wants to purchase a used vehicle is considering purchasing the vehicle 12 and the salesperson or this person inputs the vehicle identification number of the vehicle 12 to the information processing device 11 and also inputs information requesting the condition information of the vehicle 12 to the information processing device 11, the control unit 31 of the information processing device 11 accepts the input through the input unit 34. The control unit 31 then sends the vehicle identification information and the condition information request to the server device 10 through the communication unit 33. The control unit 21 of the server device 10 receives the vehicle identification information and the condition information request through the communication unit 23.

In step S802, the server device 10 generates the condition information. The control unit 21 of the server device 10 reads the manner information associated with the vehicle identification information from the storage unit 22, and generates the condition information indicating the condition of the vehicle 12, based on the manner information. The condition information includes the total distance traveled, accident history, flood history, missed recall history, engine evaluation, drive battery evaluation, fuel efficiency, driving frequency, distance traveled per trip, driving tendency of a past driver(s) of the vehicle, warning light history, maintenance history, etc. The vehicle information sent from the vehicle 12 is added to the condition information.

In step S804, the server device 10 sends the consent period information, non-consent period information, and condition information corresponding to the vehicle identification information to the information processing device 11. The control unit 21 of the server device 10 sends the consent period information, the non-consent period information, and the condition information to the information processing device 11 through the communication unit 23. The control unit 31 of the information processing device 11 receives the consent period information, the non-consent period information, and the condition information through the communication unit 33.

In step S806, the information processing device 11 outputs the consent period information, the non-consent period information, and the condition information. The control unit 31 of the information processing device 11 produces an image for displaying the consent period information, non-consent period information, and condition information associated with the vehicle identification information, and displays the image on the output unit 36.

FIG. 8B is a modification of FIG. 8A. FIG. 8B shows a procedure that is followed when the information processing device 11 generates the condition information. The same steps as those of FIG. 8A are denoted by the same signs as those of FIG. 8A.

In step S800, the information processing device 11 sends the vehicle identification information and a request for condition information to the server device 10.

In step S801, the server device 10 sends the consent period information, the non-consent period information, the manner information for generating the condition information, and the vehicle information to the information processing device 11. The control unit 21 of the server device 10 sends the consent period information, the non-consent period information, the manner information, and the vehicle information to the information processing device 11 through the communication unit 23. The control unit 31 of the information processing device 11 receives the consent period information, the non-consent period information, the manner information, and the vehicle information through the communication unit 33.

In step S802, the information processing device 11 generates the condition information. The control unit 31 generates the condition information indicating the condition of the vehicle 12, based on the manner information. In step S806, the information processing device 11 outputs the consent period information, the non-consent period information, and the condition information. The control unit 31 of the information processing device 11 produces an image for displaying the consent period information, non-consent period information, and condition information associated with the vehicle identification information, and displays the image on the output unit 36.

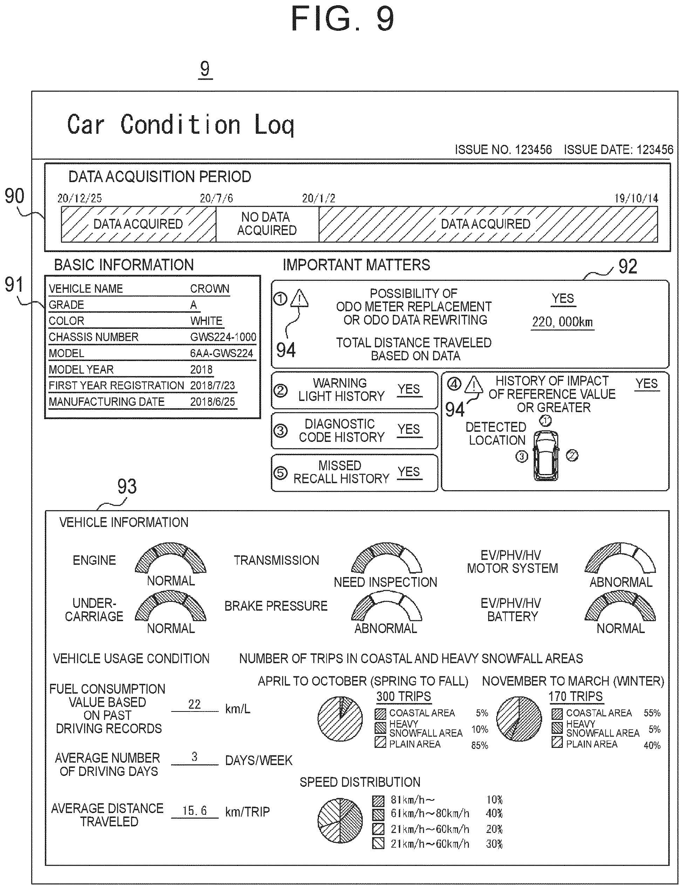

FIG. 9 illustrates a display example of the consent period information, the non-consent period information, and the condition information on the information processing device 11. A screen 9 displayed on the output unit 36 of the information processing device 11 includes a period display 90 in the form of a single bar chart. The period display 90 indicates the consent and non-consent periods. The total length of the period display 90 corresponds to the overall length of the period of use of the vehicle 12 of interest by one or more users. The consent period is denoted by "data acquired," and the non-consent period is denoted by "no data acquired." The lengths of the consent and non-consent periods correspond to their lengths in the whole period. The consent period is displayed in a different manner from the non-consent period, such as in a different color or a different hatching pattern. The screen 9 includes items such as basic information 91, important matters 92, and vehicle information 93. The basic information 91 includes the vehicle identification information, and the important matters 92 correspond to the condition information. The basic information 91 includes information on items such as vehicle name, grade, color, chassis number, model, model year, date of first year registration, and manufacturing date. The important matters 92 include information on items such as possibility of ODO meter replacement or ODO data rewriting, total distanced traveled based on data, warning light history, diagnostic code history, missed recall history, and history of impact of a reference level or greater. The information on these items is generated based on the manner information acquired when maintenance was done on the vehicle 12. The vehicle information 93 displays items such as condition of engine specifications, conditions of transmission and motor system, condition of undercarriage, brake pressure, and condition of battery in three levels such as normal, need inspection, and abnormal. The vehicle information 93 further includes information on items such as fuel consumption value based on the past driving records, average number of driving days, average distance traveled, and number of trips in coastal and heavy snowfall areas.

The salesperson or the person who wants to purchase a used vehicle can check the condition information and vehicle information of the vehicle 12 on the screen 9 and decide whether to purchase the vehicle 12 based on the condition information and the vehicle information. At this time, since the salesperson or the person who wants to purchase a used vehicle can visually check the proportions of the consent and non-consent periods on the period display 90, the salesperson or the person who wants to purchase a used vehicle can determine reliability of the condition information from the presence or absence of the non-consent period or the proportion of the overall length of the non-consent period to the length of the whole period. Specifically, the greater the overall length of the non-consent period, the higher the probability that the manner information on which the condition information is based may be lacking, and thus the poorer the reliability of the condition information. An item whose reliability is reduced by the presence of the non-consent period having a length greater than a desired threshold may also be displayed in a manner different from other items on the screen 9 by adding a warning notification 94 etc. to the item. According to such a notification, the salesperson or the person who wants to purchase a used vehicle can more reliably consider reduction in reliability of the condition information, and therefore can more accurately know the condition of the vehicle 12.

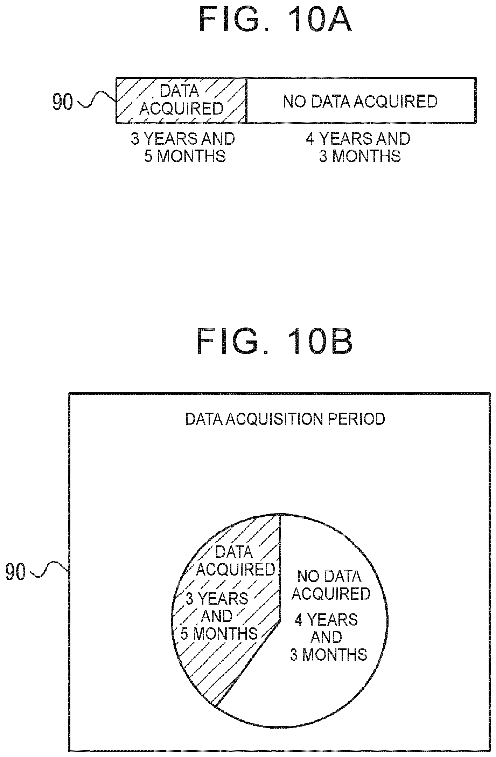

FIGS. 10A to 10D show modifications of the display example of the consent period information and the non-consent period information.

In FIG. 10A, the period display 90 in the form of a single bar chart shows the overall proportion of the consent periods and the overall proportion of the non-consent periods instead of intermittently showing the consent and non-consent periods in actual order. The salesperson or the person who wants to purchase a used vehicle can thus visually and intuitively know the overall proportion of the non-consent periods in which the manner information of the vehicle 12 was not acquired to the whole period. The salesperson or the person who wants to purchase a used vehicle can therefore more accurately know the condition of the vehicle 12.

FIG. 10B illustrates an example in which the period display 90 is in the form of a pie chart rather than in the single bar chart shown in FIG. 10A.

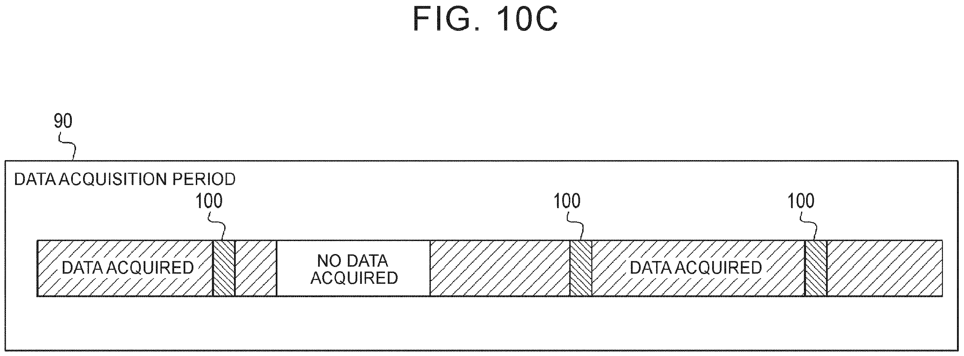

In FIG. 10C, periods from when one user sold the vehicle 12 until the next user purchased the vehicle 12, that is, periods 100 during which the vehicle 12 is under management of the seller (hereinafter referred to as the intermediary periods) are shown in the period display 90 of FIG. 9. In the intermediary period 100, when the seller has done maintenance on the vehicle 12, the maintenance information can be sent from the information processing device 11 to the server device 10 and stored in the server device 10. The intermediary period 100 can therefore be regarded as equivalent to the consent period. Accordingly, the control unit 31 of the information processing device 11 displays the intermediary period 100 in a manner that is the same as or similar to the consent period (FIG. 10C shows an example in which each intermediary period 100 is displayed in a manner similar to the consent period) and thus distinguishes the intermediary period 100 from the non-consent period. The salesperson or the person who wants to purchase a used vehicle can thus know the acquisition period of the manner information of the vehicle 12 that is closer to the actual acquisition period, and can therefore more accurately know the condition of the vehicle 12.

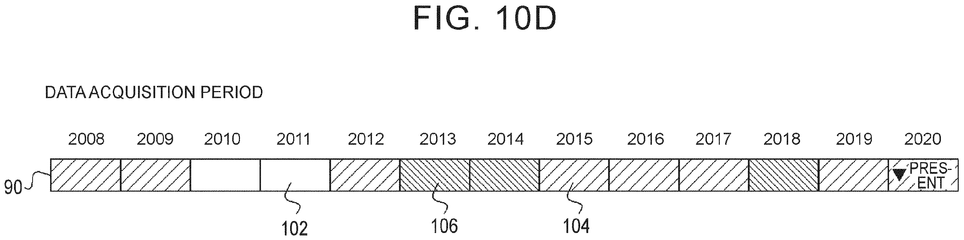

In FIG. 10D, the period display 90 is in the form of a stack of bars each representing unit time. In this modification, each bar corresponds to one year, and the bars are displayed in different manners depending on the overall length of the consent or non-consent periods in each year. For example, in the case where there is only the non-consent period(s) throughout the year, the corresponding bar is displayed as a white bar like a bar 102. In the case where there is only the consent period(s) throughout the year, the corresponding bar is displayed as a hatched bar like a bar 104. In the case where the period was switched from the consent period to the non-consent period or vice versa due to the change of user at some point of the year, that is, when there are both consent and non-consent periods in one year, the corresponding bar is displayed in a different manner from the bars 102 and 104, like a bar 106. For example, in the case where the overall length of the consent periods is 6 months or more, the corresponding bar is displayed in a different color or a different hatching pattern from the bar 104. In the case where the overall length of the consent periods is less than 6 months, the corresponding bar is displayed in a similar manner to the bar 102 of the non-consent period. Alternatively, the bar 106 may be colored or hatched in the same manner as the bar 104. The information processing device 11 may divide the overall length of the non-consent periods in the bar 106 into three or more levels, and display the bar 106 in a manner corresponding to the level. As described above, the control unit 31 of the information processing device 11 displays the total length of the past consent and non-consent periods in the form of a stack of bars each representing unit time. The salesperson or the person who wants to purchase a used vehicle can thus know the time of use of the vehicle 12 in the past that is closer to the actual time, and therefore can more accurately know the condition of the vehicle 12.

Instead of or in addition to such graphic displays as shown in FIGS. 9 and 10A to 10D, the information processing device 11 may display each of the overall length of the consent periods and the overall length of the non-consent periods by, for example, a character string such as "3 years and 5 months."

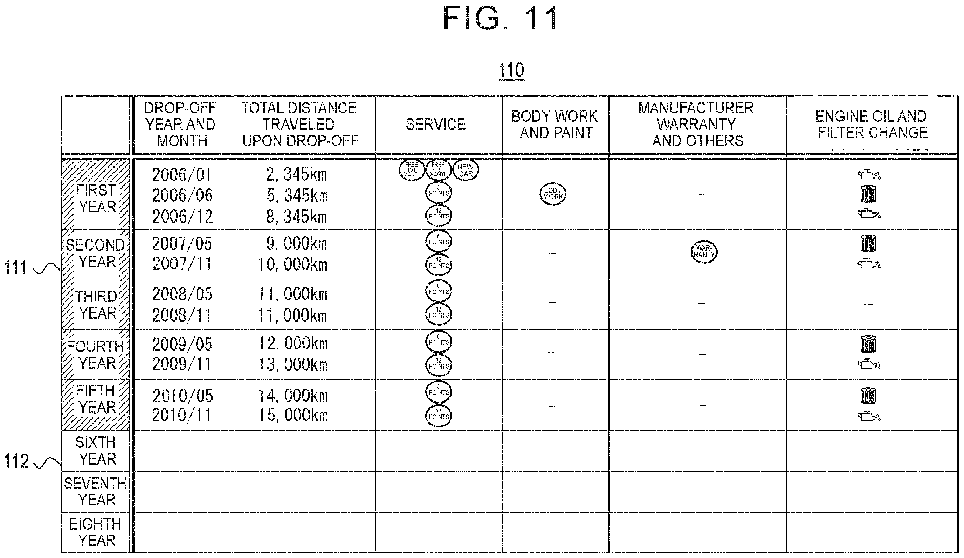

FIG. 11 is a further modification of the display example of the consent period information, non-consent period information, and condition information on the information processing device 11. In this example, a table 110, consent periods 111, and non-consent periods 112 are shown as the condition information. Service information has been sorted in chronological order in the table 110, and the consent periods 111 and the non-consent periods 112 correspond to the chronological order of the table 110. In the table 110, the total distance traveled upon drop-off, icons indicating inspection items, icons indicating performance of body work or paint, an icon indicating application of manufacturer warranty, icons indicating engine oil or filter change, etc. are displayed in the order the vehicle 12 was dropped off at the maintenance facility. The consent periods 111 and the non-consent periods 112 are displayed on the left side of the table 110 so as to correspond to the drop-off years and months in the table 110. The control unit 31 of the information processing device 11 thus displays in chronological order the maintenance information indicating maintenance done in the consent and non-consent periods in the past, so that the salesperson or the person who wants to purchase a used vehicle can visually know the maintenance history of the vehicle 12. The salesperson or the person who wants to purchase a used vehicle can therefore more accurately know the condition of the vehicle 12.

In the above description, used vehicle sales is described as an example. However, the present embodiment is also applicable to used home sales. In this case, the manner information is information indicating the contents of inspections, repairs, remodeling, etc. done on a house. The condition information includes an indicator of livability of the house etc. based on the manner information.

In the above embodiment, the processing and control programs defining the operation of the information processing device 11 and the in-vehicle device 40 may be stored in advance in the storage unit 22 of the server device 10 or a storage unit of other server device, and may be downloaded to each device via the network 13. Alternatively, the processing and control programs may be stored in a portable, non-transitory recording or storage medium that can be read by each device and may be read from the medium by each device.

The present disclosure is not limited to the above embodiment. For example, a plurality of blocks shown in the block diagram may be integrated into one block, or a block may be divided into a plurality of sub-blocks. Instead of performing the steps of the flowchart in chronological order according to the description, the steps may be performed in parallel or in a different order either according to the processing capability of the device that performs each step or as necessary. Other modifications can be made without departing from the spirit and scope of the present disclosure.

## Claims

1. A server device (10) comprising:
a storage unit (22) storing first period information indicating a first period, manner information in the first period, and second period information indicating a second period, the first period being a period of use of an item, such as an automobile or a house, by a user who has consented to provide the manner information, the manner information being information indicating a manner of use of the item, and the second period being a period of use of the item by a user who has not consented to provide the manner information; and
a control unit (21) configured to output to an information processing device (11) information for displaying the first period information, the second period information, and condition information on the information processing device (11), the condition information being information indicating a condition of the item based on the manner information.

2. The server device (10) according to claim 1, wherein the control unit (21) is configured to
determine the first period or the second period based on information on a point in time at which the user acquired a right to use the item, information on a point in time at which the user lost the right to use the item, and information indicating consent or non-consent of the user to provision of the manner information, and
store the first period information or the second period information in the storage unit (22).

3. The server device (10) according to claim 1, wherein the control unit (21) is configured to
determine the first period based on position information of the item, and
store the first period information indicating the first period in the storage unit (22).

4. The server device (10) according to any one of claims 1 to 3, wherein the condition information includes information on a condition of which reliability is reduced according to a length of the second period; and preferably wherein the information on the condition of which reliability is reduced according to the length of the second period is displayed in a different manner from information on other condition on the information processing device (11).

5. The server device (10) according to any one of claims 1 to 4, wherein unit time occupied by either the first period or the second period and unit time during which both the first period and the second period are present are displayed in different manners from each other on the information processing device (11).

6. A system comprising:
the server device (10) according to any one of claims 1 to 5; and
the information processing device (11) according to any one of claims 1 to 5.

7. An information processing device (11) comprising:
a communication unit (33) configured to send and receive information to and from a server device (10), the server device (10) storing first period information indicating a first period, manner information in the first period, and second period information indicating a second period, the first period being a period of use of an item, such as an automobile or a house, by a user who has consented to provide the manner information, the manner information being information indicating a manner of use of the item, and the second period being a period of use of the item by a user who has not consented to provide the manner information;
a display unit (36); and
a control unit configured to display the first period information, the second period information, and condition information on the display unit (36) based on the information sent from the server device (10), the condition information being information indicating a condition of the item based on the manner information.

8. The information processing device (11) according to claim 7, wherein the control unit is configured to display information on a condition of which reliability is reduced according to a length of the second period on the display unit (36) in a different manner from information on other condition, the information on the condition of which reliability is reduced according to the length of the second period being included in the condition information.

9. The information processing device (11) according to claim 7, wherein the control unit is configured to display unit time occupied by either the first period or the second period and unit time during which both the first period and the second period are present on the display unit (36) in different manners from each other.

10. A non-transitory storage medium storing a program that is executable by a computer and that causes the computer to perform functions as the information processing device (11) according to any one of claims 7 to 9.

11. An operation method for a system including a server device (10) and an information processing device (11) configured to communicate with the server device (10), the operation method comprising:
storing in the server device (10) first period information indicating a first period, manner information in the first period, and second period information indicating a second period, the first period being a period of use of an item, such as an automobile or a house, by a user who has consented to provide the manner information, the manner information being information indicating a manner of use of the item, and the second period being a period of use of the item by a user who has not consented to provide the manner information;
outputting from the server device (10) to the information processing device (11) information for displaying the first period information, the second period information, and condition information, the condition information being information indicating a condition of the item based on the manner information; and
displaying the first period information, the second period information, and the condition information on the information processing device (11) based on the information sent from the server device (10).

12. The operation method according to claim 11, further comprising:
determining the first period or the second period by the server device (10) based on information on a point in time at which the user acquired a right to use the item, information on a point in time at which the user lost the right to use the item, and information indicating consent or non-consent of the user to provision of the manner information; and
storing the first period information indicating the determined first period or the second period information indicating the determined second period in the server device (10).

13. The operation method according to claim 12, further comprising:
determining the first period by the server device (10) based on position information of the item; and
storing the first period information indicating the determined first period in the server device (10).

14. The operation method according to any one of claims 11 to 13, wherein the condition information includes information on a condition of which reliability is reduced according to a length of the second period; and preferably wherein the operation method further comprises displaying the information on the condition of which reliability is reduced according to the length of the second period in a different manner from information on other condition on the information processing device (11).

15. The operation method according to any one of claims 11 to 14, further comprising displaying unit time occupied by either the first period or the second period and unit time during which both the first period and the second period are present on the information processing device (11) in different manners from each other.
